# EUROPEAN PATENT APPLICATION

(11) **EP 1 857 418 A1**
(43) Date of publication of application: **21.11.2007**
(21) Application number: 07290622.5
(22) Date of filing: 15.05.2007
(51) Int. Cl.: C02F 1/50

(54) **Water-circulating sterilizer for killing legionella in hot springs, pools, bathtubs and cooling towers**

(30) Priority: 16.05.2006 JP 2006136440
(71) Applicant: Japan System Planning Co., Ltd., Shibuya-ku Tokyo 151-0073 (JP)
(72) Inventor: Kumano, Katsuyuki, Tokyo 151-0073 (JP)
(74) Representative: Berger, Helmut

(57) **Abstract**

The object of the invention is to provide a water-circulating sterilizer that uses no chlorine-base bactericidal agents, has no effect on the human body with no change of water quality, with no running cost and completely free frommaintenance while effectivesterilizationis possible within shorter time.

The invention provides a water-circulating sterilizer disposed in a pipeline of circulating water for sterilizing Legionella pneumophila surviving in circulating water, wherein plural sets of a first, second and third alloy plates are sequentially disposed from a water inflow port, the first alloy plate comprises an alloy containing at least copper and tin, the second alloy plate comprises an alloy containing at least silicon and titanium, and the third alloy plate comprises an alloy containing at least iron, molybdenum and manganese.

## Description

### BACKGROUND OF THE INVENTION

### 1. Field of the Invention

The invention relates to a water-circulating sterilizer for killing Legionella pneumophila surviving in circulating water in hot spring, pools, bathtubs and cooling towers.

### 2. Description of the Related Art

Bacteria such as Legionella pneumophila are liable to proliferate in circulation passageways of circulating facilities such as hot spring. Chlorine-base bactericidal agents are added to water, or ozone sterilization or UV sterilization is used for killing Legionella pneumophila. Japanese Patent Application Laid-Open (JP-A) Nos. 2006-102734 and 2005-211771 disclose, for example, a sterilization method not using the chlorine-base bactericidal agent.

In the method of JP-A No. 2006-102734, a filler retaining a silver-base antibacterial agent is filled in a sterilizer of water, and the bacteria are killed by dissolution of silver ions in water by allowing circulating water to contact the filler.

A water-circulating sterilizer is provided in the water-circulating passageway in the method in JP-A No. 2005-211771. The water-circulating sterilizer has serially connected plural containers composed of a bottom plate having plural holes and side walls standing at the outer circumference of the bottom plate in the flow passageway, and plural pellets formed by mixing a compound having antibiotic activity with a resin are placed in respective containers. Alternatively, the flow passageway is divided into plural chambers in the water-circulating sterilizer, and each chamber is composed of a container formed by mixing a compound having antibiotic activity with a resin. The container has a bottom plate having plural holes, and one container and the other container of the plural containers connected in adjoining relation to one another are positioned so that the holes provided at the bottom plate of one container do not overlap the holes provided at the bottom plate of the other container in the direction perpendicular to the bottom plate.

### SUMMARY OF THE INVENTION

The method for adding ozone or chlorine-base bactericidal agent is not preferable since ozone and the chlorine-base bactericidal agent may affect human body or may change the quality of spa water of the hot spring. Sterilization is not perfect and difficult to control by the bactericidal methods such as UV sterilization since portions not irradiated with the UV light may be left behind by these methods. Facilities such as sterilization water tank connected to the circulation pipeline are necessary in the above-mentioned methods, and the water-circulating sterilizer was of ten dif f icult to install in terms of installation spaces.

The method for sterilizing with silver ions dissolved in water by allowing the filler retaining a silver compound to contact water as described in JP-A No. 2006-102734 requires frequent change of the filler since the bactericidal action gradually decreases due to dissolution of silver into water, and application of this method was difficult due to quite high running cost.

The method for disposing the pellets formed by mixing a compound having antibiotic property with a resin, or the method for constructing the water-circulating sterilizer by forming the container itself by mixing the compound having antibiotic property with the resin as described in JP-A No. 2005-211771 does not affect the human body or does not change water quality since no chlorine-base bactericidal agent is used. This method does not require the pellet or container to be frequently changed as in the method in JP-ANo. 2006-102734 since silver ions are not dissolved in water. However, the bactericidal effect may decrease year after year. In addition, a space for installing equipments other than pipeline portions is necessary, and installation may be difficult in some cases. The time necessary for sterilization is quite long since water is merely made to contact the compound having antibiotic property, and the bactericidal action is naturally restricted.

The object of the invention is to provide a water-circulating sterilizer using no chlorine-base bactericidal agent, without any effects to the human body and changes of water quality, with no running cost and completely free from maintenance while effective sterilization is possible within shorter time than in related arts.

The invention for solving the above-mentioned problems provides, in a first aspect, a water-circulating sterilizer for killing Legionella pneumophila surviving in circulating water by being disposed in a circulating water pipeline, wherein plural sets of a combination comprising first, second and third alloy plates are sequentially disposed in the pipeline from an inflow port thereof, and wherein the first alloy plate comprises an alloy containing at least copper and tin, the second alloy plate comprises an alloy containing at least silicon and titanium, and the third alloy plate comprises an alloy containing at least iron, molybdenum and manganese.

The invention for solving the above-mentioned problems provides, in a second aspect, the water-circulating sterilizer according to the first aspect, wherein the first alloy plate comprises an alloy of five metals of nickel, zinc and iron in addition to copper and tin, the second alloy plate comprises an alloy of six metals of nickel, zinc, copper and silver in addition to silicon and titanium, and the third alloy plate comprises an alloy of eight metals of nickel, zinc, copper, tin and aluminum in addition to iron, molybdenum and manganese.

The invention for solving the above-mentioned problems provides, in a third aspect, the water-circulating sterilizer according to the first or second aspect, wherein the first, second and third alloy plates are disposed in a cylinder by being shifted to one another, and each of these alloy plates has a surface area from 1/4 or more to 2/3 or less of the cross sectional area within the inner diameter of the cylinder.

Electrons of Legionella pneumophila are extracted with the first alloy plate, the bacteria are electrically adsorbed on the second alloy plate, and the bacteria are charged on the third alloy plate by combining three alloy plates of the first, second and third alloy plates having different performances to one another, and these steps are repeated. Accordingly, sterilization may be possible within a shorter time than in the related art. Since the first, second and third alloy plates are not dissolved in water at all or not ionized, the function of the water-circulating sterilizer may be maintained for 20 years or more. Other effects are that there is no effect on the human body, water quality is not changed, running cost is not necessary at all, and the sterilizer is completely free from maintenance.

### BRIEF DESCRIPTION OF THE DRAWINGS

Fig. 1 shows an embodiment of the water-circulating sterilizer according to the invention, where Fig. 1A is a vertical cross section; Fig. 1B is a cross section along the line A-A in Fig. 1A; Fig. 1C is a cross section along the line B-B in Fig. 1A; Fig. 1D is a cross section along the line C-C in Fig. 1A;
Fig. 2 is a perspective view of the test apparatus equipped with the water-circulating sterilizer according to the invention; and
Fig. 3 shows a schematic block diagram of installation of the water-circulating sterilizer according to the invention.

### DESCRIPTION OF THE PREFERRED EMBODIMENT(S)

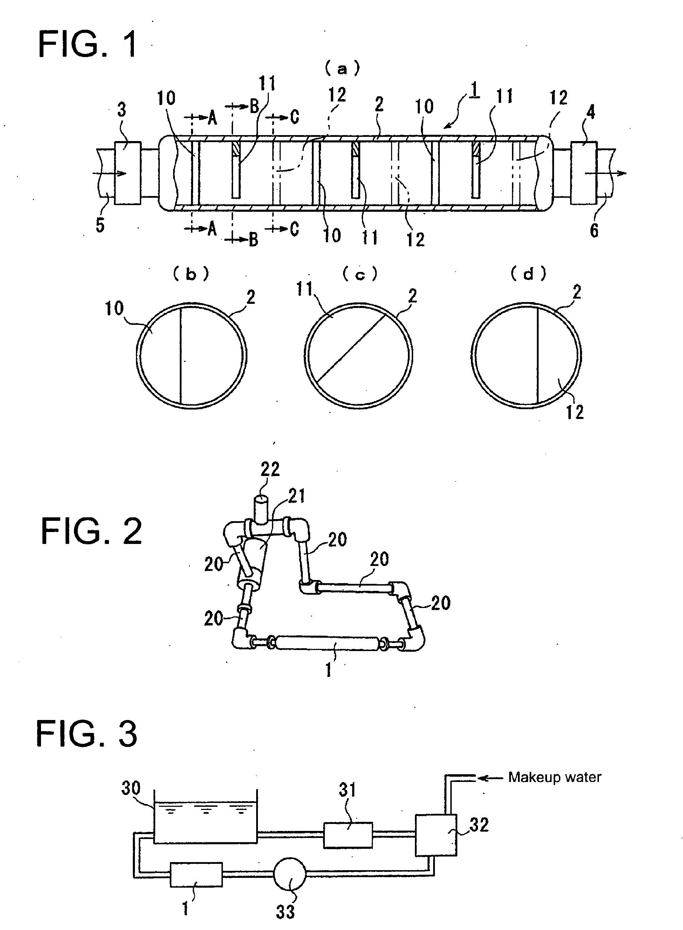

One embodiment of the water-circulating sterilizer will be described with reference to Fig. 1. Pipes 5, 6 are connected to a water inflow port and a water outflow port, respectively, of a cylinder 2 of the water-circulating sterilizer 1 made of a hardly corrodable material such as stainless steel with interposition of respective joints 3, 4. Three plates of a first alloy plate 10, a second alloy plate 11 and a third alloy plates 12 are combined into a set, and plurality sets of these first, second and third alloy plates 10, 11 and 12 are disposed in the cylinder 2 from the inflow port toward the outflow port of water (three sets in this embodiment).

The first alloy plate 10 comprises an alloy containing at least copper and tin. An alloy comprising five metals of nickel, zinc and iron in addition to copper and tin was used in this embodiment. The alloy is able to extract electrons from Legionella pneumophila by allowing the alloy to contain copper and tin.

The second alloy plate 11 comprises an alloy containing at least silicon and titanium. An alloy comprising six metals of nickel, zinc, copper and silver in addition to silicon and titanium was used in this embodiment. The alloy is able to electrically adsorb Legionella pneumophila by allowing the alloy to contain silicon and titanium.

The third alloy plate 12 comprises an alloy containing at least iron, molybdenum and manganese. An alloy comprising eight metals of nickel, zinc, copper, tin and aluminum in addition to iron, molybdenum and manganese was used in this embodiment. The alloy is able to charge Legionella pneumophila by allowing the alloy to contain molybdenum and manganese.

Each of the first, second and third alloy plates 10, 11 and 12 has a surface area from 1/4 or more to 2/3 or less of the cross sectional area within the inner diameter of the cylinder 2. However, a surface area from 1/3 or more to 1/2 or less is preferable in terms of pressure loss. The first, second and third alloy plates 10, 11 and 12 are disposed by being shifted to one another so that water is able to easily contact the plates. While the first, second and third alloy plates 10, 11 and 12 are formed in a semi-circular shape in this embodiment, the shape is not particularly restricted and may be configured as perforated alloy disks.

The water-circulating sterilizer 1 configured as described above is used by being attached in a circulating flow passageway. When water flows in the water-circulating sterilizer 1, electrons of Legionella pneumophila in water are extracted with the first alloyplate 10 at first, the bacteria are electrically adsorbed on the second alloy plate 11, and the bacteria are charged on the third alloy plate 12. Viability of Legionella pneumophila declines by repeating the steps for contacting the first, second and third alloy plates 10, 11 and 12, and the bacteria finally become extinct. Although Legionella pneumophila survives after the bacteria passed through the water-circulating sterilizer 1 once, the bacteria are extinct while they circulate through the water-circulating sterilizer 1 plural times.

Effective sterilization in a shorter period than in the related art is possible with combined three alloy plates of the first, second and third alloy plates 10, 11 and 12 having different performances to one another, by repeating the steps of: extracting electrons from Legionella pneumophila at the first alloy plate 10; electrically adsorbing the bacteria on the second alloy plate 11; and charging the bacteria on the third alloy plate 12. Since the first, second and third alloy plates 10, 11 and 12 do not dissolve in water and are not ionized in water, the function of the water-circulating sterilizer 1 maybe maintained for 20 years or more. The sterilizer neither affects the human body nor changes the quality of water since chlorine-base bactericidal agents are not used. There is no need of the running cost at all while the sterilizer is free from maintenance.

The results of bactericidal tests with the water-circulating sterilizer 1 will be then described. The test using the test apparatus shown in Fig. 2 was requested to Japan Food Research Laboratories. The water-circulating sterilized 1 was connected topipelines 20 of the test apparatus . The pipeline 20 is a zinc-plated steel pipe with a diameter of 20A and a length of 1845 mm. The capacity of the pump 21 used was 29 liters/min. Culture medium of Legionella pneumophila containing 2.8 × 10⁶ cells/m³ of the bacteria was filled in the circulating apparatus from the test solution inflow port 22 at the room temperature of 21 to 23°C, and the solution was allowed to continuously flow (circulate) for 48 hours at a flow rate of 1.5 m/sec with a pump 21.

The results shown in Table 1 were obtained by the test. Table 1 shows that almost all Legionella pneumophila at a concentration of 2.8 × 10⁶ cells/m³ at the start of the test was killed after 24 killed.

**Table 1**

| | Number of Legionella pneumophila in the test apparatus |
|---|---|
| Before circulation | 2.8 × 10⁶ cells/m³ |
| 1 hour after the start of circulation | 2.8 × 10⁵ cells/m³ |
| 6 hours after the start of circulation | 1.6 × 10³ cells/m³ |
| 24 hours after the start of circulation | 10 cells/m³ or less |
| 48 hours after the start of circulation | 10 cells/m³ or less |

Fig. 3 shows an example of installation of the water-circulating sterilizer of the invention. Warm water in a pool or bathtub 30 flows into a heat source 32 such as a boiler after removing impurities such as hairs, scales and dusts floating in water by a filter 31. Water heated with the heat source 32 is circulated with a pump 33 through the pool or bathtub 30 after passing through the water-circulating sterilizer 1. Effective sterilization of Legionella pneumophila as described above is possible by disposing the water-circulating sterilizer 1 in the circulating flow passageway. It is needless to say that the water-circulating sterilizer 1 according to the embodiment of the invention may be widelyused in the circulating flowpassagewayof, for example, the hot spring and cooling tower other than the above-mentioned pool and bathtub 30.

## Claims

1. A water-circulating sterilizer disposed in a pipeline of circulating water for sterilizing Legionella pneumophila surviving in circulating water, wherein
plural sets of a first, second and third alloy plates are sequentially disposed from a water inflow port,
the first alloy plate comprising an alloy containing at least copper and tin,
the second alloy plate comprising an alloy containing at least silicon and titanium, and
the third alloy plate comprising an alloy containing at least iron, molybdenum and manganese.

2. The water-circulating sterilizer according to Claim 1, **characterized in that** the first alloy plate comprises an alloy of five metals of nickel, zinc and iron in addition to copper and tin, the second alloy plate comprises an alloy of six metals of nickel, zinc, copper and silver in addition to silicon and titanium, and the third alloy plate comprises an alloy of eight metals of nickel, zinc, copper, tin and aluminum in addition to iron, molybdenum and manganese.

3. The water-circulating sterilizer according to Claim 1 or 2, **characterized in that** the first, second and third alloy plates are disposed so as to be shifted to one another in a cylinder, and these alloy plates has a surface area from 1/4 or more to 2/3 or less of the cross sectional area within the inner diameter of the cylinder.
